# EUROPÄISCHE PATENTSCHRIFT

(11) **EP 2 820 448 B1**
(45) Veröffentlichungstag und Bekanntmachung des Hinweises auf die Patenterteilung: **22.05.2019**
(21) Anmeldenummer: 13705915.0
(22) Anmeldetag: 15.02.2013
(51) Int. Cl.: G01T 1/24, G01N 23/083

(54) **VERFAHREN ZUR DETEKTION VON STRAHLUNG UND UNTERSUCHUNGSEINRICHTUNG ZUR STRAHLUNGSBASIERTEN UNTERSUCHUNG EINER PROBE**
METHOD FOR DETECTING RADIATION AND EXAMINATION DEVICE FOR THE RADIATION-BASED EXAMINATION OF A SAMPLE
PROCÉDÉ DE DÉTECTION D'UN RAYONNEMENT ET DISPOSITIF D'ANALYSE PERMETTANT D'ANALYSER UN ÉCHANTILLON EN METTANT EN OEUVRE UN RAYONNEMENT.

(30) Priorität: 29.02.2012 DE 102012004087
(43) Veröffentlichungstag der Anmeldung: 07.01.2015
(73) Patentinhaber: Thalhammer, Stefan, 80639 München (DE)
(72) Erfinder: THALHAMMER, Stefan, 80639 München (DE); HOFSTETTER, Markus, 85579 Neubiberg (DE); HOWGATE, John, 80335 München (DE); STUTZMANN, Martin, 85435 Erding (DE)
(74) Vertreter: v. Bezold & Partner Patentanwälte - PartG mbB
(86) Internationale Anmeldenummer: PCT/EP2013/000454
(87) Internationale Veröffentlichungsnummer: WO 2013/127496

(56) Entgegenhaltungen:
- US-A1- 2012 025 087
- HOFSTETTER M ET AL: "Development and evaluation of gallium nitride-based thin Films for X-ray dosimetry", PHYSICS IN MEDICINE AND BIOLOGY IOP PUBLISHING LTD. UK, Bd. 56, Nr. 11, 4. Mai 2011 (2011-05-04), Seiten 3215-3231, XP002696779, ISSN: 0031-9155

## Beschreibung

Die Erfindung betrifft ein Verfahren zur Detektion von Strahlung, z. B. bei der Untersuchung einer Probe, insbesondere ein Verfahren, bei dem mit einer Quelleneinrichtung erzeugte Strahlung durch die Probe hindurchtritt und mit einem photoelektrischen Festkörperdetektor erfasst wird, insbesondere ein Verfahren zur Untersuchung der Probe unter Verwendung der Strahlung, wie z. B. Röntgenstrahlung oder Photonenstrahlung. Des Weiteren betrifft die Erfindung eine Untersuchungseinrichtung, die zur Untersuchung einer Probe unter Verwendung von Strahlung, insbesondere Röntgenstrahlung oder Photonenstrahlung, eingerichtet ist. Anwendungen der Erfindung sind insbesondere in der medizinischen Bildgebung oder bei der Charakterisierung von Materialien gegeben.

Zur Detektion von Röntgenstrahlung sind verschiedene Techniken bekannt, die sich in Bezug auf den erfassbaren Energiebereich, die Empfindlichkeit, die Lebensdauer und die räumliche Auflösung unterscheiden. Beispielsweise weisen Ionisationskammern zur Detektion von Röntgenstrahlung eine hohe Empfindlichkeit, jedoch eine geringe örtliche Auflösung auf. Eine verbesserte örtliche Auflösung wird mit Festkörperdetektoren, z. B. auf der Basis von MOSFET's, Diamant, Dioden und Szintillations-Dosimetern erzielt, wobei sich in diesen Fällen jedoch Nachteile, z. B. in Bezug auf den Energiebereich oder die Empfindlichkeit ergeben können.

Eine erhebliche Verbesserung der Empfindlichkeit wurde mit Detektoren auf der Basis einer GaN/AlGaN-Heterostruktur erreicht (siehe M. Hofstetter et al. in "Applied Physics Letter", Bd. 96, 2010, S. 092110). In Reaktion auf die Bestrahlung mit Röntgenstrahlung werden im GaN-basierten Detektormaterial Ladungsträger erzeugt. Der am Detektor messbare Strom ist ein Maß für die empfangene Strahlungsdosis. Bisher ist man davon ausgegangen, dass GaN-basierte Detektoren nur bis zu einer unteren Strahlungsdosisgrenze von wenigen µGy/s verwendbar sind und für eine geringere Strahlungsdosis keine ausreichende Empfindlichkeit aufweisen.

Es besteht jedoch insbesondere im Sinne des Strahlenschutzes ein Interesse, Festkörperdetektoren bereitzustellen, welche den Vorteil einer hohen örtlichen Auflösung mit einer hohen Empfindlichkeit bei einer verringerten Strahlungsdosis kombinieren. Dieses Interesse besteht nicht nur bei der Detektion von Röntgenstrahlung, sondern auch bei der Detektion von Teilchenstrahlung, wie z. B. Protonenstrahlung.

Ein weiterer Detektor zur Detektion einer ionisierenden Strahlung, basierend auf GaAs, ist aus US 2012/025087 A1 bekannt.

Ferner ist aus dem Dokument "Development and evaluation of gallium nitride-based thin films for x-ray dosimetry", Hofstetter M.et al, Physics in Medicine and Biology IOP Publishing limited, Bd. 56, Nr. 11, 4. Mai 2011, Seiten 3215-3231, ein Verfahren gemäß dem Oberbegriff Anspruchs 1 bekannt.

Die Aufgabe der Erfindung ist es, ein verbessertes Verfahren zur Detektion von Strahlung bereitzustellen, mit dem Nachteile herkömmlicher Verfahren vermieden werden und dass sich insbesondere durch eine verbesserte Empfindlichkeit bei Bestrahlung mit einer niedrigen Strahlungsdosis auszeichnet. Die Aufgabe der Erfindung ist es des Weiteren, eine verbesserte Untersuchungseinrichtung zur Untersuchung einer Probe unter Verwendung von Strahlung bereitzustellen, mit der Nachteile beim Betrieb herkömmlicher Festkörperdetektoren vermieden werden und die insbesondere ermöglicht, dass die Probe einer verminderten Strahlungsdosis ausgesetzt wird.

Diese Aufgaben werden durch ein Verfahren zur Detektion von Strahlung und eine Untersuchungseinrichtung mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt der Erfindung wird die obige Aufgabe durch ein Verfahren zur Detektion von Strahlung, insbesondere Röntgenstrahlung oder Protonenstrahlung, bei der strahlungsbasierten Untersuchung (Analyse, Test, insbesondere Abbildung) einer Probe gelöst, bei der die Strahlung mit einer Quelleneinrichtung erzeugt wird, durch die Probe durchtritt und mit mindestens einem photoelektrischen Festkörperdetektor detektiert wird. Der Festkörperdetektor enthält ein einzelnes Detektorelement oder eine Anordnung (Array) von Detektorelementen. Jedes Detektorelement weist mindestens einen Photoleitungsabschnitt, der zur strahlungsinduzierten Generation von Ladungsträgern angepasst ist, und mindestens einen Potentialtopfabschnitt auf, der zur Aufnahme freier Ladungsträger angepasst ist. Jeder Photoleitungsabschnitt hat eine Ansprechschwelle, oberhalb derer die strahlungsinduzierte Generation der Ladungsträger erfolgt. Bei Bestrahlung des Detektorelements mit einer Strahlungsdosis unterhalb der Ansprechschwellewerden im mindestens einen Photoleitungsabschnitt keine messbaren Ladungsträger generiert. Gemäß der Erfindung ist vorgesehen, dass die Strahlung derart eingestellt wird, dass der Festkörperdetektor mit einer Strahlungsdosis bestrahlt wird, die von der Ansprechschwelle jedes Photoleitungsabschnitts getrennt gewählt ist. Die Strahlung wird so eingestellt, dass Strahlung mit einer Strahlungsdosisrate auf den Festkörperdetektor trifft, die unterhalb der Ansprechschwelle jedes Photoleitungsabschnitts liegt. Gemäß der Erfindung wird der Festkörperdetektor in einem Empfindlichkeitsbereich des mindestens einen Potentialtopfabschnitts betrieben.

Gemäß einem zweiten Gesichtspunkt der Erfindung wird die genannte Aufgabe durch eine Untersuchungseinrichtung gelöst, die für eine strahlungsbasierte Untersuchung einer Probe konfiguriert ist und eine Quelleneinrichtung zur Erzeugung von Strahlung, insbesondere Röntgenstrahlung oder Protonenstrahlung, eine Probenhalterung zur Aufnahme der Probe und einen photoelektrischen Festkörperdetektor mit mindestens einem Detektorelement zur Detektion der Strahlung umfasst. Das mindestens eine Detektorelement enthält mindestens einen Photoleitungsabschnitt mit einer vorbestimmten Ansprechschwelle und mindestens einen Potentialtopfabschnitt zur Aufnahme freier Ladungsträger. Gemäß der Erfindung ist die Untersuchungseinrichtung mit einer Stelleinrichtung ausgestattet, die zur Einstellung der Strahlung derart angepasst ist, dass das mindestens eine Detektorelement getrennt von der Ansprechschwelle des mindestens einen Photoleitungsabschnitts und in einem Empfindlichkeitsbereich des mindestens einen Potentialtopfabschnitts betrieben wird.

Die Erfindung basiert auf den folgenden Erkenntnissen der Erfinder. Es wurde festgestellt, dass sich das Signal des Detektorelements, z. B. auf der Basis von GaN, aus zwei verschiedenen Teilsignalen zusammensetzt, die auf verschiedenen physikalischen Phänomenen basieren. Ein erstes Teilsignal wird im Photoleitungsabschnitt, typischerweise dem Volumenmaterial des Detektorelements, generiert. Ein zweites Teilsignal wird im Potentialtopfabschnitt, wie z. B. einem Abschnitt mit einem zweidimensionalen Elektronengas, im Detektorelements generiert. Von den Erfindern wurde festgestellt, dass das erste Teilsignal zwar bei einer Strahlungsdosisrate unterhalb von wenigen µGy/s, insbesondere unterhalb von 1 µGy/s verschwindet, wobei jedoch bei geringerer Strahlungsdosisrate das zweite Teilsignal messbar bleibt. Das zweite Teilsignal zeichnet sich durch eine relative Empfindlichkeit aus, die vergleichbar mit der des Photoleitungsabschnitts ist. Als besonderer Vorteil der Erfindung wurde jedoch festgestellt, dass zur Erzeugung des Signals mit dem Potentialtopfabschnitt (zweites Teilsignal) lediglich etwa 0,1 % der Anzahl von Strahlungsquanten, insbesondere Röntgenphotonen oder Protonen, erforderlich sind. Vorteilhafterweise ermöglicht dieses überraschende Ergebnis, dass Proben, insbesondere biologische Proben in der medizinischen Bildgebung oder andere strahlungsempfindliche Proben, mit einer im Vergleich zur herkömmlichen Technik erheblich verringerten Strahlungsdosisrate untersucht werden können. Die Strahlungsbelastung der Proben wird um mehrere Größenordnungen reduziert.

Ein weiterer Vorteil der Erfindung besteht darin, dass der Potentialtopfabschnitt im Festkörperdetektor ein schnelles Ansprechverhalten aufweist. Die Erzeugung eines Detektorsignals und der Abbau des Detektorsignals durch Ladungsträger im Potentialtopfabschnitt erfolgt in einem Zeitbereich unterhalb von 10 ms, insbesondere unterhalb von 5 ms. Dies ermöglicht eine Verringerung der Messzeiten, was sich insbesondere in der Computertomografie vorteilhaft auswirkt. Tomographische Schnittbilder können im Vergleich zu herkömmlichen Techniken in einer verringerten Zeit aufgenommen werden, so dass eine weitere Verringerung der Strahlungsbelastung der Probe, z. B. eines untersuchten Probanden erzielt wird.

Die erfindungsgemäß vorgesehene Einstellung der Strahlung umfasst eine Beeinflussung der Strahlung während deren Erzeugung und/oder Übertragung zum Festkörperdetektor derart, dass die gewünschte Strahlungsdosisrate (Strahlungsdosisrate unterhalb der Ansprechschwelle des Photoleitungsabschnitts) den strahlungsempfindlichen Bereich des Festkörperdetektors, d. h. das mindestens eine Detektorelement, erreicht. Vorteilhafterweise sind verschiedene Varianten der Einstellung der Strahlung verfügbar, die gemäß bevorzugten Ausführungsformen der Erfindung einzeln oder in Kombination vorgesehen sein können.

Gemäß einer ersten Variante kann die Einstellung der Strahlung beim Betrieb der Quelleneinrichtung vorgesehen sein. Die Emissionsintensität der Quelleneinrichtung wird so eingestellt, dass die gewünschte Strahlungsdosisrate auf den Festkörperdetektor trifft. Hierzu ist die erfindungsgemäße Untersuchungseinrichtung vorzugsweise mit einer Quellensteuerung ausgestattet, mit der die Emissionsintensität der Quelleneinrichtung einstellbar ist. Mit der Quellensteuerung wird z. B. bei einer Röntgenröhre zur Erzeugung von Röntgenstrahlung ein Kathodenstrom oder bei einer Protonenquelle ein Elektronenstrom zur Ionisation von Wasserstoffatomen eingestellt. Die Einstellung der Emissionsintensität hat den Vorteil, dass die Quelleneinrichtung besonders einfach an die aktuellen Untersuchungsbedingungen angepasst werden kann.

Gemäß einer zweiten Variante umfasst die Einstellung der Strahlung die Einstellung einer Filtereinrichtung, die zwischen der Quelleneinrichtung und dem Festkörperdetektor angeordnet wird. Die Filtereinrichtung ist angepasst, die von der Quelleneinrichtung erzeugte Strahlung so zu schwächen, dass der Festkörperdetektor mit der gewünschten Strahlungsdosisrate beaufschlagt wird. Die Filtereinrichtung enthält mindestens einen Filter, der zur Einstellung von Röntgenstrahlung z. B. aus Aluminium oder zur Einstellung von Protonenstrahlung z. B. aus Quarzglas hergestellt ist. Die Filtereinrichtung kann an jeder Position des Strahlungsweges zwischen der Quelleneinrichtung und dem Festkörperdetektor angeordnet sein. Besonders bevorzugt wird die Filtereinrichtung jedoch zwischen der Quelleneinrichtung und der Probe angeordnet, so dass die Strahlungsbelastung der Probe minimiert werden kann.

Gemäß einer dritten Variante der Erfindung umfasst die Einstellung der Strahlung eine Einstellung eines Detektionsabstandes zwischen der Quelleneinrichtung und dem Festkörperdetektor. Durch eine Vergrößerung des Detektionsabstandes kann im Fall einer Quelleneinrichtung, mit der nichtkollimierte Strahlung erzeugt wird, die Strahlungsdosisrate am Festkörperdetektor verringert werden. Hierzu ist die Untersuchungseinrichtung vorzugsweise mit einer Positioniereinrichtung ausgestattet, mit welcher der Detektionsabstand einstellbar ist. Mit der Positioniereinrichtung kann die Position des Festkörperdetektors relativ zur Quelleneinrichtung und/oder die Position der Quelleneinrichtung relativ zum Festkörperdetektor eingestellt werden. Besonders bevorzugt ist eine Ausführungsform der Erfindung, bei welcher der Detektionsabstand durch eine Positionierung der Quelleneinrichtung variiert und auf den gewünschten Wert eingestellt wird, während der Abstand zwischen der Probe und dem Festkörperdetektor unverändert bleibt. In diesem Fall kann vorteilhafterweise die Strahlungsbelastung der Probe minimiert werden.

Die erfindungsgemäße Einstellung der Strahlung kann in Abhängigkeit von den Untersuchungsbedingungen durch den Fachmann vorgenommen werden. Die Einstellung der Strahlung kann insbesondere in Abhängigkeit von der Strahlungsschwächung in der Probe und/oder unter Berücksichtigung von Tabellenwerten, ggf. nach einem Vorversuch zur Ermittlung der Strahlungsdosisrate derart, dass der Festkörperdetektor im Empfindlichkeitsbereich des Potentialtopfabschnitts betrieben wird, vorgenommen werden. Vorteilhafterweise ist die Einstellung der Strahlung automatisierbar. Gemäß einer bevorzugten Ausführungsform der Erfindung kann eine Regelung der Einstellung der Strahlung, insbesondere der Einstellung der Emissionsintensität, der Filtereinrichtung und/oder des Detektionsabstandes, in Abhängigkeit von einem Detektorsignal des Festkörperdetektors vorgesehen sein. Die Einstellung der Strahlung erfolgt derart, dass die Strahlungsdosisrate am Festkörperdetektor so geschwächt wird, dass das Detektorsignal charakteristisch für den Betrieb des Festkörperdetektors im Empfindlichkeitsbereich des Photoleitungsabschnittes ist. Vorzugsweise ist die Untersuchungseinrichtung mit einer Regeleinrichtung ausgestattet, mit der die Stelleinrichtung, insbesondere die Quellensteuerung, eine Filtersteuerung der Filtereinrichtung und/oder die Positioniereinrichtung in Abhängigkeit von dem Detektorsignal des Festkörperdetektors regelbar ist.

Vorteilhafterweise kann die Erfindung mit verschiedenen Arten von Festkörperdetektoren realisiert werden. Gemäß der Erfindung enthält der Festkörperdetektor mindestens ein GaN- oder GaAs-basiertes Halbleiter-Detektorelement mit einer Halbleiter-Heterostruktur, in der mindestens ein Potentialtopfabschnitt gebildet ist. Besonders bevorzugt ist das Halbleiter-Detektorelement auf der Basis von GaN, GaAlN oder GaAs vorgesehen, das die Heterostruktur zur Bildung des mindestens einen Potentialtopfabschnitts aufweist. Die Heterostruktur ist so konfiguriert, dass der mindestens eine Potentialtopfabschnitt ein zweidimensionales Elektronengas (2 DEG) enthält, wie es z. B. in der oben genannten Publikation von M. Hofstetter et al. beschrieben ist.

Gemäß der Erfindung kann die Empfindlichkeit des Festkörperdetektors durch eine Beaufschlagung des mindestens einen Potentialtopfabschnittes mit einer elektrischen Spannung verändert und auf einen gewünschten Wert eingestellt werden. Hierzu ist das mindestens eine Detektorelement mit einer Stellelektrode ausgestattet, die in Bezug auf den Potentialtopfabschnitt so angeordnet ist, dass bei Beaufschlagung der Stellelektrode mit der Spannung vorzugsweise die Ladungsträgerverteilung im Potentialtopfabschnitt verändert werden kann.

Vorteilhafterweise ist das erfindungsgemäße Verfahren mit verschiedenen geometrischen Anordnungen der Quelleneinrichtung, der Probe und des Festkörperdetektors einfach oder mehrfach wiederholt durchführbar. Gemäß einer besonders bevorzugten Anwendung der Erfindung wird das Verfahren bei einer computer-tomographischen Bildgebung verwendet. Hierzu wird das erfindungsgemäße Verfahren mit verschiedenen Projektionsrichtungen der Strahlung durch die Probe wiederholt, um eine Vielzahl von Projektionsbildern der Probe aufzunehmen und eine computer-tomographische Abbildung der Probe durchzuführen. Bei dieser Ausführungsform der Erfindung wird die Untersuchungseinrichtung vorzugsweise durch einen Computer-Tomographen bereitgestellt, oder die Untersuchungseinrichtung ist Teil eines Computer-Tomographen.

Weitere Vorteile und Einzelheiten der Erfindung werden im Folgenden unter Bezugnahme auf die beigefügten Zeichnungen beschrieben. Es zeigen:
- Figur 1:: eine schematische Illustration einer ersten Ausführungsform der erfindungsgemäßen Untersuchungseinrichtung;
- Figur 2:: eine schematische Illustration einer weiteren Ausführungsform der erfindungsgemäßen Untersuchungseinrichtung;
- Figur 3:: eine schematische Illustration eines erfindungsgemäß verwendeten Detektorelements;
- Figur 4:: Kurvendarstellungen von experimentellen Ergebnissen, die mit dem erfindungsgemäßen Verfahren erhalten wurden;
- Figur 5:: eine schematische Illustration eines weiteren, erfindungsgemäß verwendeten Detektorelements; und
- Figur 6:: Kurvendarstellungen von weiteren experimentellen Ergebnissen, die mit dem Detektorelement gemäß Figur 5 gewonnen wurden.

Bevorzugte Ausführungsformen der Erfindung werden im Folgenden unter beispielhaftem Bezug auf die Untersuchung einer Probe mit Röntgenstrahlung und die Detektion der Röntgenstrahlung mit einem GaN-basierten Festkörperdetektor mit einem (Matrix-)Array von Detektorelementen jeweils mit einem Photoleitungsabschnitt und einem Potentialtopfabschnitt beschrieben. Es wird betont, dass die Umsetzung der Erfindung nicht auf die Untersuchung mit Röntgenstrahlung beschränkt, sondern auch mit anderen Strahlungsarten, insbesondere mit Protonenstrahlung möglich ist. Des Weiteren kann ein Festkörperdetektor von einem anderen Typ, insbesondere ein Halbleiterdetektor, wie z. B. ein GaAs-basierter Halbleiterdetektor verwendet werden. Die Detektorelemente können jeweils mehrere Photoleitungsabschnitte und/oder mehrere Potentialtopfabschnitte aufweisen, wobei in diesen Fällen die Strahlung so eingestellt wird, dass alle Detektorelemente im Empfindlichkeitsbereich aller Potentialtopfabschnitte betrieben werden. Obwohl die Verwendung eines Arrays von Detektorelementen für die Transmissions-Bildgebung bevorzugt sein kann, kann der Festkörperdetektor alternativ nur ein einzelnes Detektorelement aufweisen.

Die Ausführungsformen der Erfindung werden in Bezug auf die Einstellung der Strahlung (Abschwächung der Strahlung) derart, dass der Festkörperdetektor im Empfindlichkeitsbereich des Potentialtopfabschnitts bestrahlt wird, und ein entsprechend konfiguriertes Untersuchungsgerät beschrieben. Einzelheiten des Betriebs einer Quelleneinrichtung, wie z. B. einer Röntgenquelle oder einer Protonenquelle, des Betriebs eines Festkörperdetektors, der Bildaufnahme mit einer Vielzahl von Detektorelementen und/oder der computer-tomographischen Bildgebung werden nicht beschrieben, da diese an sich aus dem Stand der Technik bekannt sind.

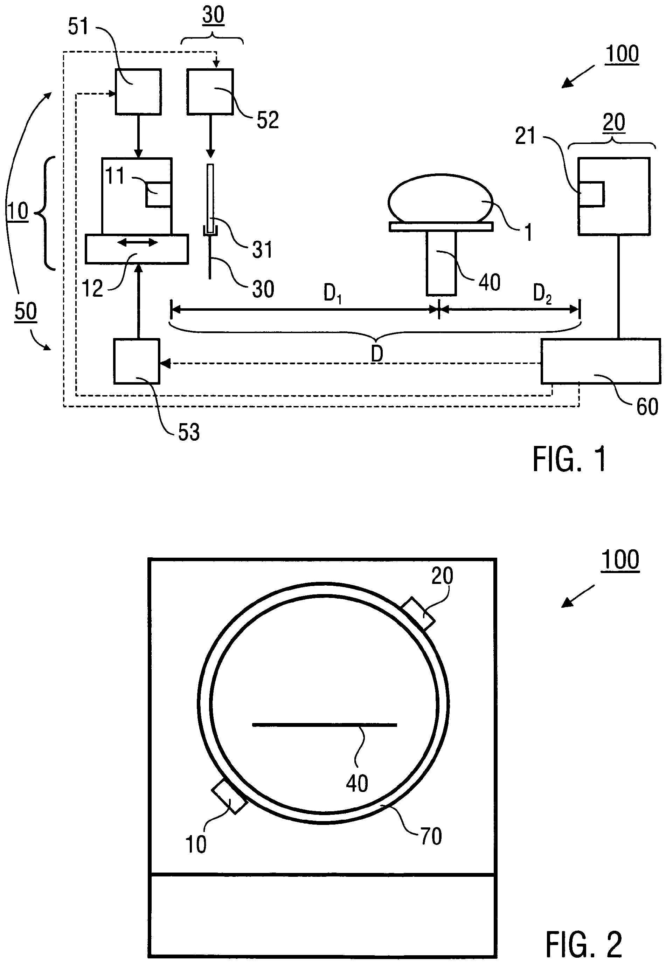

Figur 1 illustriert schematisch eine erste Ausführungsform einer erfindungsgemäßen Untersuchungseinrichtung 100, die für eine Untersuchung einer Probe 1 unter Verwendung von Röntgenstrahlung konfiguriert ist und hierzu eine Quelleneinrichtung 10, eine Probenhalterung 40 und einen photoelektrischen Festkörperdetektor 20 umfasst. Die Quelleneinrichtung 10 umfasst eine Röntgenröhre 11, die auf einem verstellbaren Quellenträger 12, umfassend z. B. eine Schlitten-Schienen-Kombination, angeordnet ist. Der Festkörperdetektor 20 enthält ein Array von Detektorelementen 21, die typischerweise sämtlich vom gleichen Typ sind. Die Probenhalterung 40 ist entlang des Strahlungsweges zwischen der Quelleneinrichtung 10 und dem Festkörperdetektor 20 so angeordnet, dass die auf der Probenhalterung 40 platzierte Probe 1 bei Betrieb der Untersuchungseinrichtung 100 durchstrahlt und die Röntgenstrahlung auf das Array der Detektorelemente 21 fällt.

Der Abstand D zwischen der Röntgenröhre 11 und dem Array der Detektorelemente 21 setzt sich aus dem Quellen-Proben-Abstand D₁ und dem Proben-Detektor-Abstand D₂ zusammen. Mit dem Quellenträger 12 ist der Detektionsabstand D, z. B. in einem Bereich von 10 cm bis 5 m, veränderlich. Dabei wird vorzugsweise der Proben-Detektor-Abstand D₂ festgehalten, während der Quellen-Proben-Abstand D₁ verändert wird.

Figur 1 illustriert des Weiteren die Bereitstellung einer schematisch illustrierten Filtereinrichtung 30, die im Strahlungsweg zwischen der Röntgenröhre 11 und der Probe 1 angeordnet ist. Die Filtereinrichtung 30 umfasst z. B. einen Aluminium-Filter 31. Obwohl in Figur 1 ein Abstand zwischen der Röntgenröhre 11 und der Filtereinrichtung 30 gezeigt ist, kann es in der Praxis von Vorteil sein, wenn die Filtereinrichtung 30 mit der Quelleneinrichtung 10 fest verbunden und z. B. mit dieser bei Bedarf beweglich ist (siehe Figur 2).

Die erfindungsgemäße Untersuchungseinrichtung 100 ist mit einer Stelleinrichtung 50 ausgestattet, mit der die Röntgenstrahlung eingestellt, insbesondere geschwächt werden kann, so dass die Detektorelemente 21 in einem Empfindlichkeitsbereich der Potentialtopfabschnitte der Detektorelemente 21 betrieben werden. In Figur 1 sind verschiedene Varianten der Stelleinrichtung 50 gemeinsam gezeigt, die eine Quellensteuerung 51, eine Filtersteuerung 52 der Filtereinrichtung 30 und eine Positioniereinrichtung 53 umfassen. Es ist nicht zwingend vorgesehen, dass die genannten Maßnahmen zur Einstellung der Strahlung gemeinsam vorgesehen sind. Alternativ können nur eines von der Quellensteuerung 51, der Filtersteuerung 52 und der Positioniereinrichtung 53 oder Kombinationen von diesen vorgesehen sein.

Die Quellensteuerung 51 ist eine Steuerschaltung, mit welcher der Kathodenstrom der Röntgenröhre 11 einstellbar ist. Die Quellensteuerung 51 kann eine separate Steuerschaltung oder in die Quelleneinrichtung 10 integriert sein. Die Filtersteuerung 52 ist ein Antrieb, mit dem verschiedene Filter 31, welche sich durch ihre Schwächungsfaktoren unterscheiden, in den Strahlungsweg geschoben werden. Die Positioniereinrichtung 53 ist eine weitere Steuerschaltung, mit welcher der Quellenträger 12 betätigbar ist. Die Positioniereinrichtung 53 kann ebenfalls als separate Steuerschaltung vorgesehen oder in die Quelleneinrichtung 10 integriert sein.

Die Untersuchungseinrichtung 100 ist bei der dargestellten Ausführungsform der Erfindung mit einer Regeleinrichtung 60 ausgestattet, mit der die Komponenten der Stelleinrichtung 50 in Abhängigkeit von einem Detektorsignal von einem der Detektorelemente 21 des Festkörperdetektors 20 regelbar sind. Die Regeleinrichtung 60 vergleicht das Detektorsignal des Festkörperdetektors mit einem vorgegebenen Strahlungsdosisraten-Referenzwert. Des Weiteren gibt die Regeleinrichtung 60 an die Quellensteuerung 51, die Filtersteuerung 52 und/oder die Positioniereinrichtung 53 ein Stellsignal aus, bis durch die Einstellung der Emissionsintensität, des Filters und/oder des Detektionsabstandes D das Detektorsignal eine Strahlungsdosisrate unterhalb des gewünschten Referenzwerts repräsentiert. Diese Regelung kann laufend während des Betriebs der Untersuchungseinrichtung 100 oder in einem Vorversuch, bei dem die Probe 1 auf der Probenhalterung 40 vorgesehen ist, durchgeführt werden. Die Bereitstellung der Regeleinrichtung 60 ist nicht zwingend erforderlich. Alternativ können der Kathodenstrom der Röntgenröhre 11, der Detektionsabstand und/oder der Filter 31 manuell eingestellt werden.

Die Untersuchung der Probe 1 mit der Untersuchungseinrichtung 100 erfolgt derart, dass mit der Quelleneinrichtung 10 Röntgenstrahlung erzeugt und durch den Filter 31 und die Probe 1 zum Festkörperdetektor 20 gerichtet wird. Die Röntgenstrahlung tritt durch die Probe 1 hindurch und wird dabei geschwächt. Die durch die Probe hindurchgetretene Strahlung wird mit dem Festkörperdetektor ortsaufgelöst erfasst. Das Detektorsignal jedes Detektorelements 21 des Festkörperdetektors ist für die Zahl der Ladungsträger charakteristisch, die im Potentialtopfabschnitt des Detektorelements 21 erzeugt werden. Anschließend werden die Detektorsignale des Festkörperdetektors 20 ausgewertet und z. B. einer Bildrekonstruktionsprozedur unterzogen, um ein Projektionsbild der Probe 1 zu erhalten.

Die Untersuchung der Probe 1 kann wiederholt werden, wobei verschiedene Projektionsrichtungen zur Rekonstruktion eines tomographischen Bildes eingestellt werden. Hierzu wird vorzugsweise die zweite Ausführungsform der erfindungsgemäßen Untersuchungseinrichtung 100 gemäß Figur 2 verwendet. In diesem Fall ist die Untersuchungseinrichtung 100 ein Computer-Tomograph (in Figur 2 schematisch dargestellt), mit einer Kombination aus einer Quelleneinrichtung 10 und einem Festkörperdetektor 20, die in einer Gantry 70 um die Probenhalterung 40 rotierend angeordnet ist. Der Festkörperdetektor 20 enthält je nach Typ des Computer-Tomographen ein einzelnes Detektorelement oder ein Array von Detektorelementen. Bei dieser Ausführungsform der Erfindung ist der Detektionsabstand konstant, so dass zur Einstellung der Röntgenstrahlung die Einstellung des Kathodenstroms der Röntgenröhre in der Quelleneinrichtung 10 und/oder die Einstellung eines Filters (nicht dargestellt) an der Quelleneinrichtung 10 vorgesehen ist. Die Untersuchung der Probe 1 auf der Probenhalterung 40 erfolgt, wie es an sich vom herkömmlichen Betrieb von Computer-Tomographen bekannt ist, wobei die Röntgenstrahlung so eingestellt wird, dass der Festkörperdetektor 20 im Empfindlichkeitsbereich des mindestens einen Potentialtopfabschnitts betrieben wird.

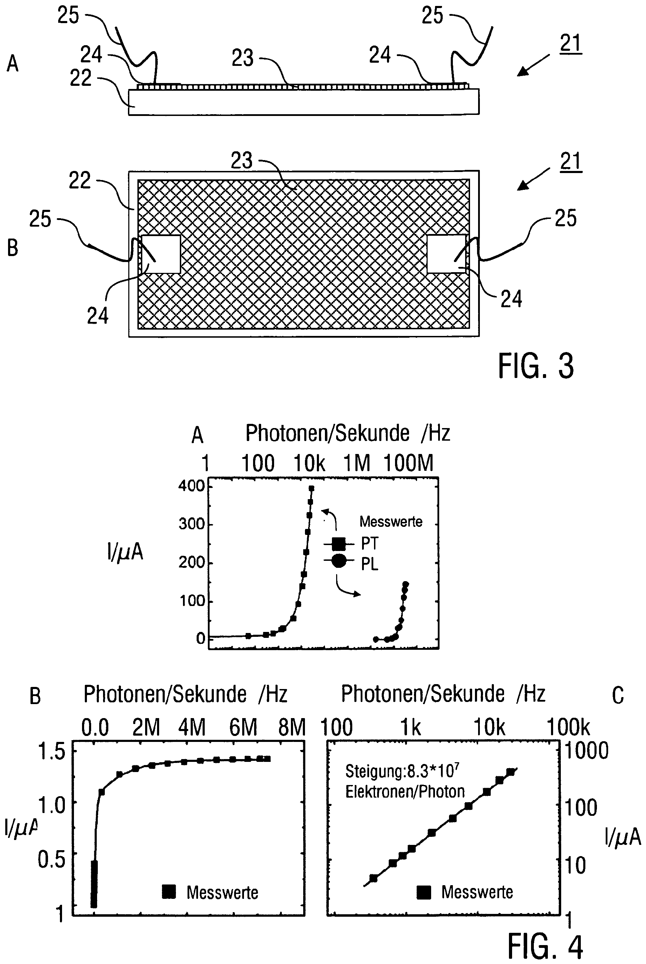

Figur 3 illustriert schematisch ein Beispiel eines Detektorelements 21 zur Detektion der Röntgenstrahlung in schematischer Schnittansicht (Figur 3A) und in schematischer Draufsicht (Figur 3B). Das Detektorelement 21 umfasst ein Trägersubstrat 22, eine Detektorschicht 23 und Kontaktelektroden 24, die über Verbindungsleitungen 25 mit einer elektronischen Schaltung zur Strommessung (nicht dargestellt) verbunden sind. Das Trägersubstrat 22 umfasst z. B. Saphir mit einer Dicke von 0,33 mm. Die Detektorschicht 23 ist eine GaN-AlGaN-Heterostruktur, wie sie z. B. in der oben genannten Publikation von M. Hofstetter et al. beschrieben ist. Die Detektorschicht 23 enthält einen Schichtaufbau mit einem Photoleitungsabschnitt und einem Potentialtopfabschnitt zur Aufnahme freier Ladungsträger. Die Kontaktelektroden 24, die auch als Source- und Drain-Elektroden bezeichnet werden, bestehen z. B. aus Ti-Al. Vorzugsweise haben die Kontaktelektroden die gleiche Breite wie die Detektorschicht. Sie sind mittels thermischem Aufdampfen oder Elektronenstrahl-Aufdampfen auf der Detektorschicht 23 aufgebracht. Die Maße der Detektorschicht 23 (Figur 3B) betragen z. B. 0,5 mm 2 mm, während die Maße der Kontaktelektroden 24 z. B. jeweils 500 µm · 500 µm betragen. Das Detektorelement 21 ist für Röntgenstrahlung empfindlich, die mit einer Röntgenröhre mit einer Spannung im Bereich von 20 kV bis 300 kV erzeugt wird.

Figur 4 illustriert experimentelle Ergebnisse, die bei Bestrahlung eines Detektorelements 21 gemäß Figur 3 ermittelt wurden. Figur 4A zeigt den Detektorstrom I, der durch ortsaufgelöste Messungen im Photoleitungsabschnitt PL ("off channel") und im Potentialtopfabschnitt ("on channel") gemessen wurde. Bei einem Photonenfluss unterhalb von rd. 1 Millionen Photonen pro Sekunde werden zum Detektorsignal beitragende Ladungsträger ausschließlich im Potentialtopfabschnitt erzeugt, wo ein zweidimensionales Elektronengas gebildet ist. In Figur 4B ist der im Potentialtopfabschnitt gemessene Detektorstrom I in einem Bereich eines höheren Photonenfluss gezeigt. Mit sinkendem Photonenfluss fällt die Zahl der im Potentialtopfabschnitt der Detektorschicht 23 generierten Ladungsträger drastisch ab, und der Detektorstrom I verringert sich entsprechend. Im unteren Bereich des Photonenfluss (Figur 4C) zeigt sich eine lineare Empfindlichkeitskurve des Potentialtopfabschnitts. Die Erfinder haben festgestellt, dass ein linearer Zusammenhang zwischen dem Detektorstrom und der Dosisrate in dem Dosisratenbereich besteht, in dem im Photoleitungsabschnitt nur vernachlässigbar wenige Ladungsträger und im Potentialtopfabschnitt die Ladungsträger generiert werden, welche das Detektorsignal bilden. Gemäß der Erfindung erfolgt die Detektion der Röntgenstrahlung in dem in den Figur 4B und 4C gezeigten Dosisratenbereich, so dass einerseits die Strahlungsbelastung der Probe minimiert und andererseits ein reproduzierbar auswertbares Signal mit hoher Empfindlichkeit gemessen wird.

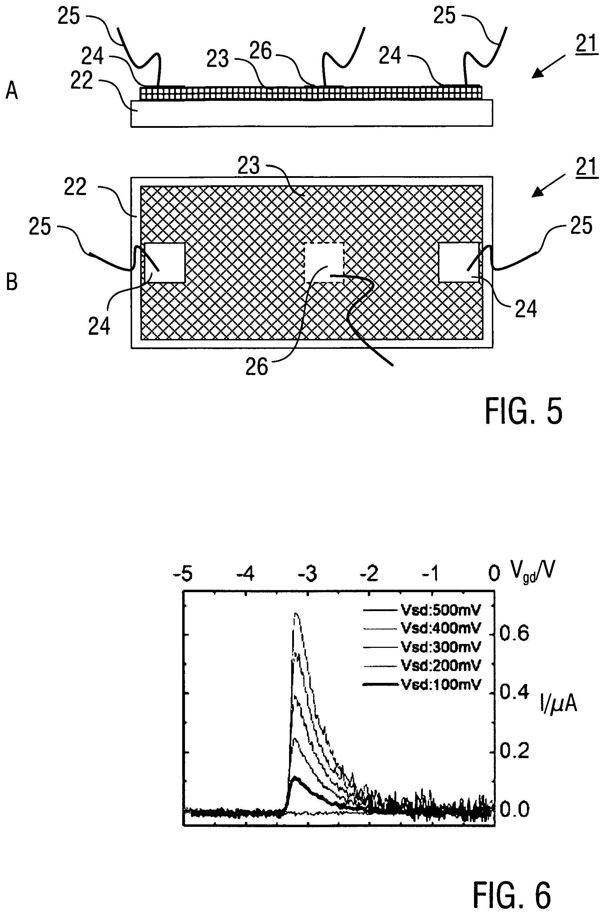

Figur 5 illustriert eine abgewandelte Variante eines erfindungsgemäß verwendeten Detektorelements 21, das im Wesentlichen wie das Detektorelement 21 gemäß Figur 3 aufgebaut und zusätzlich mit einer Stellelektrode 26 ausgestattet ist, die auch als Gate-Elektrode bezeichnet wird. Bei Beaufschlagung der Stellelektrode 26 mit einer elektrischen Spannung wird auf den Potentialtopfabschnitt in der Detektorschicht 23 ein elektrisches Potential ausgeübt, welches die Empfindlichkeit des Detektorelements 21 beeinflusst.

In Figur 6 ist illustriert, wie der Detektorstrom I bei einer festen Dosisrate (z. B. 10⁵ Protonen/sec) in Abhängigkeit von der Spannung V_{gd} zwischen der Stellelektrode 26 und einer der Elektroden 24 mit verschiedenen Spannungen V_{sd} zwischen den Elektroden 24 erzeugt wird. Es zeigt sich eine Zunahme des Detektorstroms I und mit dieser eine Erhöhung der Empfindlichkeit mit zunehmender Spannung an der Stellelektrode 26.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Detektion von Strahlung bei der Untersuchung einer Probe (1), umfassend die Schritte:
(a) Erzeugung der Strahlung, insbesondere Röntgenstrahlung oder Protonenstrahlung, mit einer Quelleneinrichtung (10),
(b) Durchtritt der Strahlung durch die Probe (1), und
(c) Detektion der Strahlung mit mindestens einem photoelektrischen Festkörperdetektor (20), der einen Photoleitungsabschnitt mit einer vorbestimmten Ansprechschwelle und einen Potentialtopfabschnitt zur Aufnahme freier Ladungsträger enthält, wobei der Festkörperdetektor (20) ein GaN- oder GaAs-basierter Halbleiterdetektor ist und der Potentialtopfabschnitt ein zweidimensionales Elektronengas (2DEG) enthält, **gekennzeichnet durch** den Schritt
(d) Einstellung der Strahlung derart, dass der Festkörperdetektor (20) getrennt von der Ansprechschwelle des Photoleitungsabschnitts und in einem Empfindlichkeitsbereich des Potentialtopfabschnitts betrieben wird.

2. Verfahren gemäß Anspruch 1, bei dem Schritt (d) mindestens eines umfasst von
(d1) Einstellung einer Emissionsintensität der Quelleneinrichtung (10),
(d2) Einstellung einer Filtereinrichtung (30), die zwischen der Quelleneinrichtung (10) und dem Festkörperdetektor (20), insbesondere zwischen der Quelleneinrichtung (10) und der Probe (1), angeordnet ist, und
(d3) Einstellung eines Detektionsabstandes zwischen der Quelleneinrichtung (10) und dem Festkörperdetektor (20), insbesondere zwischen der Quelleneinrichtung (10) und der Probe (1).

3. Verfahren gemäß Anspruch 2, bei dem
- die Einstellung der Emissionsintensität, die Einstellung der Filtereinrichtung (30) und/oder die Einstellung des Detektionsabstandes in Abhängigkeit von einem Detektorsignal des Festkörperdetektors (20) geregelt wird.

4. Verfahren gemäß einem der vorhergehenden Ansprüche, mit dem Schritt
- Einstellung einer Empfindlichkeit des Festkörperdetektors (20) durch Beaufschlagung des Potentialtopfabschnitts mit einem elektrischen Potential.

5. Verfahren gemäß einem der vorhergehenden Ansprüche, bei dem
- die Schritte (a) bis (c) mit verschiedenen Projektionsrichtungen der Strahlung durch die Probe (1) wiederholt werden und eine computer-tomographische Abbildung der Probe (1) durchgeführt wird.

6. Untersuchungseinrichtung (100), die für eine Untersuchung einer Probe (1) unter Verwendung von Strahlung, insbesondere Röntgenstrahlung oder Protonenstrahlung, konfiguriert ist, umfassend:
- eine Quelleneinrichtung (10), die zur Erzeugung der Strahlung eingerichtet ist,
- eine Probenhalterung (40) zur Aufnahme der Probe (1),
- einen photoelektrischen Festkörperdetektor (20), der zur Detektion der Strahlung eingerichtet ist und einen Photoleitungsabschnitt mit einer vorbestimmten Ansprechschwelle und einen Potentialtopfabschnitt zur Aufnahme freier Ladungsträger enthält, wobei der Festkörperdetektor (20) ein GaN- oder GaAs-basierter Halbleiterdetektor ist und der Potentialtopfabschnitt ein zweidimensionales Elektronengas (2DEG) enthält, und
- eine Stelleinrichtung (50), die zur Einstellung der Strahlung derart konfiguriert ist, dass der Festkörperdetektor (20) getrennt von der Ansprechschwelle des Photoleitungsabschnitts und in einem Empfindlichkeitsbereich des Potentialtopfabschnitts betrieben wird,
**dadurch gekennzeichnet, dass**
- der Festkörperdetektor (20) eine Stellelektrode (26) aufweist, die mit dem Potentialtopfabschnitt verbunden und zur Einstellung einer Empfindlichkeit des Festkörperdetektors (20) durch Beaufschlagung des Potentialtopfabschnitts mit einem elektrischen Potential eingerichtet ist.

7. Untersuchungseinrichtung gemäß Anspruch 6, bei der die Stelleinrichtung (50) mindestens eines umfasst von
- einer Quellensteuerung (51) zur Einstellung einer Emissionsintensität der Quelleneinrichtung (10),
- einer Filtereinrichtung (30), die zwischen der Quelleneinrichtung (10) und dem Festkörperdetektor (20), insbesondere zwischen der Quelleneinrichtung (10) und der Probe (1), angeordnet ist, und
- einer Positioniereinrichtung (52) zur Einstellung eines Detektionsabstandes zwischen der Quelleneinrichtung (10) und dem Festkörperdetektor (20), insbesondere zwischen der Quelleneinrichtung (10) und der Probe (1).

8. Untersuchungseinrichtung gemäß einem der Ansprüche 6 bis 7, bei der
- eine Regeleinrichtung (60) vorgesehen ist, mit der die Stelleinrichtung (50) in Abhängigkeit von einem Detektorsignal des Festkörperdetektors (20) regelbar ist.

## Claims

1. Method for detecting radiation during the investigation of a sample (1), comprising the steps of:
(a) generation of the radiation, in particular X-ray radiation or proton radiation, with a source device (10),
(b) passing the radiation through the sample (1), and
(c) detection of the radiation using at least one photoelectric solid-state detector (20), which includes a photoconduction section with a predetermined response threshold and a potential well section for receiving free charge carriers, wherein the solid-state detector (20) is a GaN or GaAs-based semiconductor detector and the potential well section includes a two-dimensional electron gas (2DEG),
**characterized by** the step
(d) setting the radiation in such a way that the solid-state detector (20) is operated separately from the response threshold of the photoconduction section and in a sensitivity range of the potential well section.

2. Method in accordance with claim 1, wherein step (d) comprises at least one of:
(d1) setting of an emission intensity of the source device (10),
(d2) setting of a filter device (30), which is arranged between the source device (10) and the solid-state detector (20), particularly between the source device (10) and the sample (1), and
(d3) setting of a detection distance between the source device (10) and the solid-state detector (20), particularly between the source device (10) and the sample (1).

3. Method in accordance with claim 2, wherein
- the setting of the emission intensity, the setting of the filter device (30) and/or the setting of the detection distance is feedback-controlled in dependency on a detector signal of the solid-state detector (20).

4. Method in accordance with one of the above claims, with the step
- setting of the sensitivity of the solid-state detector (20) by applying an electrical potential to the potential well section.

5. Method in accordance with one of the above claims, wherein
- the steps (a) to (c) are repeated with different projected directions of the radiation through the sample (1) and a computed tomography imaging of the sample (1) is conducted.

6. Examination device (100), which is configured for an investigation of a sample (1) using radiation, particularly X-ray radiation or proton radiation, comprising:
- a source device (10), which is adapted to generate the radiation,
- a sample holder (40) to accommodate the sample (1), and
- a photoelectric solid-state detector(20), which is adapted to detect the radiation and includes a photoconduction section with a predetermined response threshold and a potential well section for receiving free charge carriers, wherein the solid-state detector (20) is a GaN or GaAs-based semiconductor detector and the potential well section includes a two-dimensional electron gas (2DEG), and
- a setting device (50), which is configured to set the radiation in such a way that the solid-state detector (20) is operated separately from the response threshold of the photoconduction section and in a sensitivity range of the potential well section,
**characterized in that**
- the solid-state detector (20) has an actuation electrode (26), which is connected to the potential well section and which is adapted to set a sensitivity of the solid-state detector (20) by applying an electrical potential to the potential well section.

7. Examination device in accordance with claim 6, wherein the setting device (50) comprises at least one of:
- a source control (51) to adjust an emission intensity of the source device (10),
- a filter device (30), which is arranged between the source device (10) and the solid-state detector (20), particularly between the source device (10) and the sample (1), and
- a positioning device (52) to set a detection distance between the source device (10) and the solid-state detector (20), particularly between the source device (10) and the sample (1).

8. Examination device in accordance with one of the claims 6 to 7, wherein
- a control device (60) is provided, with which the control device (50) can be feedback-controlled in dependency on a detector signal from the solid-state detector (20).

## Revendications

1. Procédé de détection d'un rayonnement lors de l'analyse d'un échantillon (1), comprenant les étapes de :
(a) production du rayonnement, en particulier rayonnement X ou rayonnement de protons, avec un dispositif source (10),
(b) passage du rayonnement à travers l'échantillon (1), et
(c) détection du rayonnement avec au moins un détecteur de corps solide (20) photoélectrique, qui contient une section de photoconduction avec un seuil de réponse prédéterminé et une section de puits de potentiel pour la réception de porteurs de charge libres, dans lequel le détecteur de corps solide (20) est un détecteur semi-conducteur basé GaN ou GaAs et la section de puits de potentiel contient un gaz d'électrons bidimensionnel (2DEG),
**caractérisé par** l'étape de
(d) réglage du rayonnement de sorte que le détecteur de corps solide (20) fonctionne séparément du seuil de réponse de la section de photoconduction et dans une zone de sensibilité de la section de puits de potentiel.

2. Procédé selon la revendication 1, dans lequel l'étape (d) comprend au moins un parmi
(d1) le réglage d'une intensité d'émission du dispositif source (10),
(d2) le réglage d'un dispositif filtre (30), qui est disposé entre le dispositif source (10) et le détecteur de corps solide (20), en particulier entre le dispositif source (10) et l'échantillon (1), et
(d3) le réglage d'une distance de détection entre le dispositif source (10) et le détecteur de corps solide (20), en particulier entre le dispositif source (10) et l'échantillon (1).

3. Procédé selon la revendication 2, dans lequel
- le réglage de l'intensité d'émission, le réglage du dispositif filtre (30) et/ou le réglage de la distance de détection est réglé en fonction d'un signal de détecteur du détecteur de corps solide (20).

4. Procédé selon l'une quelconque des revendications précédentes, avec l'étape de
- réglage d'une sensibilité du détecteur de corps solide (20) par sollicitation de la section de puits de potentiel avec un potentiel électrique.

5. Procédé selon l'une quelconque des revendications précédentes, dans lequel
- les étapes (a) à (c) sont répétées avec différentes directions de projection du rayonnement par l'échantillon (1) et une image tomographique de l'échantillon (1) est réalisée.

6. Dispositif d'analyse (100), qui est configuré pour une analyse d'un échantillon (1), en utilisant un rayonnement, en particulier un rayonnement X ou un rayonnement de protons, comprenant :
- un dispositif source (10), qui est agencé pour la production du rayonnement,
- un porte-échantillon (40) pour la réception de l'échantillon (1),
- un détecteur de corps solide (20) photoélectrique, qui est agencé pour la détection du rayonnement et contient une section de photoconduction avec un seuil de réponse prédéterminé et une section de puits de potentiel pour la réception de porteurs de charge libres, dans lequel le détecteur de corps solide (20) est un détecteur semi-conducteur basé GaN ou GaAs et la section de puits de potentiel contient un gaz d'électrons bidimensionnel (2DEG), et
- un dispositif de réglage (50), qui est configuré pour le réglage du rayonnement de sorte que le détecteur de corps solide (20) fonctionne séparément du seuil de réponse de la section de photoconduction et dans une zone de sensibilité de la section de puits de potentiel,
**caractérisé en ce que**
- le détecteur de corps solide (20) présente une électrode de réglage (26), qui est reliée à la section de puits de potentiel et agencée pour le réglage d'une sensibilité du détecteur de corps solide (20) par sollicitation de la section de puits de potentiel avec un potentiel électrique.

7. Dispositif d'analyse selon la revendication 6, dans lequel le dispositif de réglage (50) comprend au moins un parmi
- une commande de source (51) pour le réglage d'une intensité d'émission du dispositif source (10),
- un dispositif filtre (30), qui est disposé entre le dispositif source (10) et le détecteur de corps solide (20), en particulier entre le dispositif source (10) et l'échantillon (1), et
- un dispositif de positionnement (52) pour le réglage d'une distance de détection entre le dispositif source (10) et le détecteur de corps solide (20), en particulier entre le dispositif source (10) et l'échantillon (1).

8. Dispositif d'analyse selon l'une quelconque des revendications 6 à 7, dans lequel
- un dispositif de régulation (60) est prévu, avec lequel le dispositif de réglage (50) peut être réglé en fonction d'un signal de détecteur du détecteur de corps solide (20).
